# EUROPEAN PATENT SPECIFICATION

(11) **EP 0 597 647 B1**
(45) Date of publication and mention of the grant of the patent: **28.07.1999**
(21) Application number: 93308885.8
(22) Date of filing: 08.11.1993
(51) Int. Cl.: H04N 7/30, H04N 7/32

(54) **Video signal encoding**
Bildsignalkodierung
Codage de signaux vidéo

(30) Priority: 13.11.1992 JP 32878292
(43) Date of publication of application: 18.05.1994
(73) Proprietor: SONY CORPORATION, Tokyo (JP)
(72) Inventor: Fujinami, Yasushi, c/o Intellectual Prop. Div., Shinagawa-ku, Tokyo 141 (JP)
(74) Representative: Turner, James Arthur

(56) References cited:
- EP-A- 0 469 648
- EP-A- 0 480 353
- EP-A- 0 520 789
- EP-A- 0 540 961
- EP-A- 0 541 302
- US-A- 4 691 233
- US-A- 4 999 704
- US-A- 5 134 476
- US-A- 5 144 424
- SIGNAL PROCESSING: IMAGE COMMUNICATION, vol.2, no.2, 1 August 1990, AMSTERDAM, NL pages 127 - 144, XP243473 A. PURI ET AL. 'Video Coding with Motion-Compensated Interpolation for CD-ROM Applications'
- SIGNAL PROCESSING: IMAGE COMMUNICATION, vol.3, no.4, 1 September 1991, AMSTERDAM, NL pages 313 - 320, XP234972 J. KATTO ET AL. 'Variable Bit-Rate Coding Based on Human Visual System'

## Description

This invention relates to video signal encoding, and more particularly (but not exclusively) to a video coder suitable for use in recording data representing a moving image on a record medium such as a disk or the like while compressing the amount of moving image data that is recorded.

The data amount of video data representing a moving image becomes enormous as compared with that of audio data, and as a result, the data has amount of video data to be compressed when video data is recorded on a record medium. A recently developed technique for compressing the data amount employs a coding apparatus for compressing a data amount of video data representing a moving image and then records the compressed recording video data of a moving image on a record medium.

However, most previously proposed coders are designed to code video data in a real time fashion, and in most cases, only one path is formed, which is responsible for the following problems:
1. Encoding is not started until material data is input;
2. Encoding cannot be started over again;
3. Fine control, such as improving the picture quality of a particular portion is impossible; and
4. The required hardware becomes large in scale because the processing must be accomplished at the frame rate.

A previously proposed method of compressing video data representing a moving image employs a compression system at a variable rate. In this compression method, in order to keep an image quality uniform, a large amount of codes is assigned to a complicated image and a lesser amount of codes is assigned to a simple image. Therefore, according to this method, an image of a uniform image quality that could not be obtained when video data is compressed at the fixed rate can be reproduced, and an image can be reproduced for a long period of time.

On the other hand, a record medium, such as a disk or the like has a fixed total amount of data that can be recorded thereon and cannot record data whose amount is beyond the upper limit of the total amount of data to be recorded.

Accordingly, when video data representing that complicated images are made continuous is compressed at the variable compression rate and recorded on the disk, it is frequently observed that such video data exceeds the total amount of data that can be recorded on the disk and cannot be recorded on the disk.

Further, when video data representing that simple images are made continuous is compressed at the variable compression rate and recorded on the disk, a recording area of the disk that should be recorded remains not being recorded uselessly.

EP-A-0 520 789 (published after the priority date of the present application) and EP-A-0 469 648 disclose video compression systems using trial quantisations, the quantisation parameters being varied in response to the data quantity produced by the trial quantisation.

According to a first aspect of the invention there is provided a video coder for compressing and encoding input video data representing a sequence of video frames, for storage on a disk storage medium, comprising: means for setting coding parameters including frame structure information which determines a coding system for every frame of said input video data; first encode means for coding said video data into first coded video data on the basis of said coding parameters; memory means for storing said coding parameters; compare means for comparing amount of said first coded video data with an available storage space on said disk storage medium; control means for varying said coding parameters stored in said memory means into other coding parameters on the basis of comparative result of said compare means and the S/N ratio of said first coded video data; and second encode means for coding the same video data that is coded in said first encode means into second coded video data for transmission on the basis of said other coding parameters.

According to a second aspect of the invention there is provided a video coding method for compressing an amount of video data representing a sequence of video frames, for storage on a disk storage medium, said method comprising the steps of: setting coding parameters including frame structure information which determines a coding system for every frame of said input video data; storing said coding parameters in memory means; first coding said video data into first coded video data on the basis of said coding parameters; comparing amount of said first coded video data with an available storage space on said disk storage medium; varying said coding parameters stored in said memory means into other coding parameters on the basis of comparative result of the step of comparing and the S/N ratio of said first coded video data; and second coding the same video data that is coded in the step of the first coding into second coded video data for transmission on the basis of said other coding parameters.

Other aspects of the invention are set out in the independent claims hereof.

A preferred embodiment of the invention described hereinbelow provides:
a video coder in which the aforementioned shortcomings and disadvantages of the prior art can be eliminated or reduced;
a video coder in which the encoding can be started at an arbitrary timing and started over again, if necessary;
a video coder in which the image quality of a particular portion of the image can be improved;
an encoder which can make a coding bit stream of a variable rate to produce a highest image quality within a range of a predetermined total amount of image data; and
an encoder which can produce a coding bit stream of variable rate that provides highest image quality by a limited range of total amount of data.

The invention will now be further described, by way of illustrative and non-limiting example, with reference to the accompanying drawings, in which:
FIG. 1 is a block diagram of an arrangement of a video coder according to an embodiment of the invention;
FIG. 2 is a flowchart to which reference will be made in explaining operation of the embodiment shown in FIG. 1;
FIG. 3 is a flowchart to which reference will be made in explaining encoding processing according to the embodiment shown in FIG. 1;
FIG. 4 is a diagram used to explain a frame structure used in the embodiment shown in FIG. 1;
FIG. 5 is a table used to explain a relation between the frame structures and the predictive modes; and
FIG. 6 is a flowchart to which reference will be made in explaining operation for determining the predictive mode according to the embodiment shown in FIG. 1.

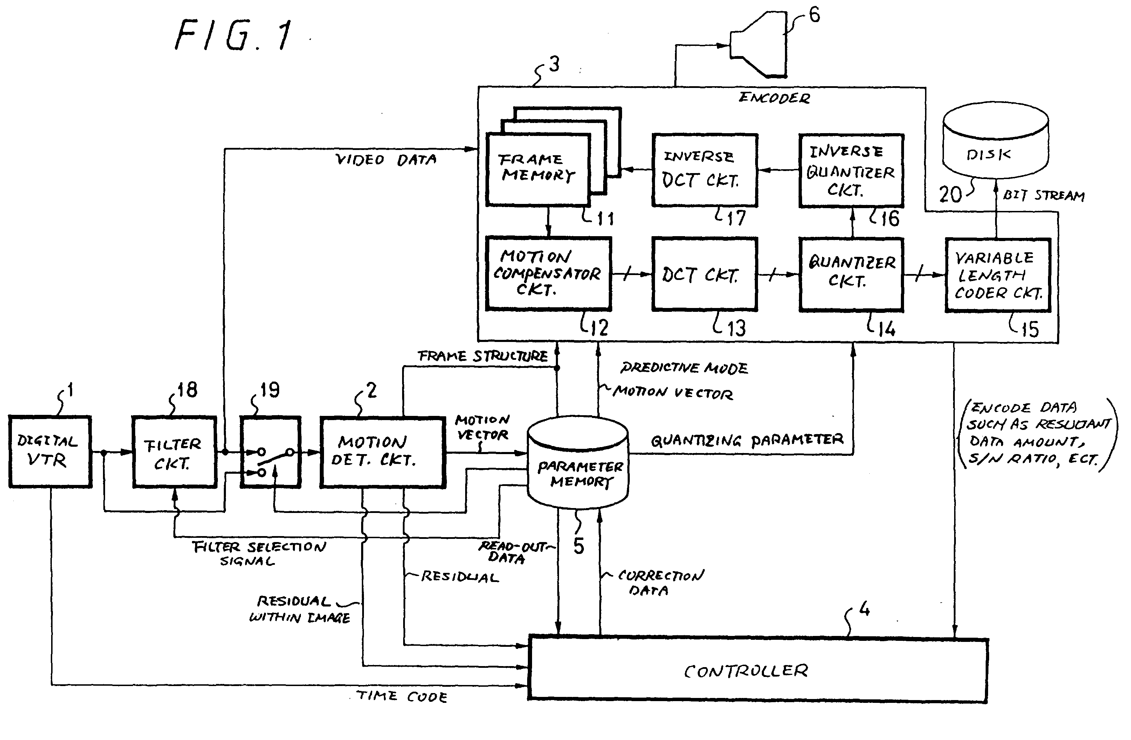

The invention will now be further described with reference to FIG. 1 of the drawings in which a video coder according to an embodiment of the present invention is shown to include a digital video tape recorder (digital VTR). A digital VTR 1 plays back video data and supplies the reproduced video data to a filter circuit 18 and a switch circuit 19. Also, the digital VTR 1 outputs a time code corresponding to the reproduced video data to a controller 4. The filter circuit 18 is a pre-filter formed of a plurality of filters having different characteristics. The filter circuit 18 selects a proper filter on the basis of a filter selection signal supplied thereto from a parameter memory 5. The video data from the digital VTR 1 is filtered out by such selected filter.

Alternatively, the filter circuit 18 may be formed of a single filter whose tap coefficient is changed on the basis of the filter selection signal supplied thereto from the parameter memory 5.

The switch circuit 19 is connected at its one input terminal with an output terminal of the filter circuit 18 and also connected at the other input terminal thereof with an output terminal of the digital VTR 1. Accordingly, the switch circuit 19 selects video data from the filter circuit 18 or video data from the digital VTR 1 in response to a switching signal supplied thereto from the parameter memory 5 and supplies the selected video data to a motion detector circuit 2. The motion detector circuit 2 detects a motion of a corresponding moving image from the input video data and supplies the controller 4 and the parameter memory 5 with a signal corresponding to a detected result.

The controller 4 calculates parameters and supplies and stores calculated parameters in the parameter memory 5. Various parameters stored in the parameter memory 5 are read out therefrom and supplied to the motion detector circuit 2, an encoder 3, the filter circuit 18 and the switch circuit 19.

As shown in FIG. 1, the encoder 3 comprises a frame memory 11 which stores video data, a motion compensator circuit 12 which calculates a difference by using a motion vector, which is known as "motion compensation", a discrete cosine transform (DCT) circuit 13 for processing data in a DCT fashion, a quantizer circuit 14 for quantizing data output from the DCT circuit 13, a variable length coder circuit 15 which converts the data quantized by the quantizer circuit 14 into a variable length code, an inverse quantizer circuit 16 for inverse-quantizing the data quantized by the quantizer circuit 14 and an inverse DCT circuit 17 for processing the data inverse-quantized by the inverse quantizer circuit 16 in an inverse quantizing fashion.

The encoder 3 encodes the video data at a variable rate and supplies a variable rate bit stream (encoded data) to a disk 20. Further, the data processed by the encoder 3 is supplied to and displayed on a monitor 6.

Operation of the video coder according to FIG.1 will now be described. The digital VTR 1 reproduces video data from a video tape, not shown, and outputs the reproduced video data to the filter circuit 18 and the switch circuit 19. The filter circuit 18 selects a proper filter from a plurality of filters incorporated therein on the basis of the filter selection signal from the parameter memory 5. The selected filter in the filter circuit 18 filters out the video data from the digital VTR 1 and supplies the filtered-out video data to the switch circuit 19. The switch circuit 19 selects either the video data directly supplied thereto from the digital VTR 1 or the filtered-out video data from the filter circuit 18, e.g., the video data from the filter circuit 18 and outputs the same to the motion detector circuit 2.

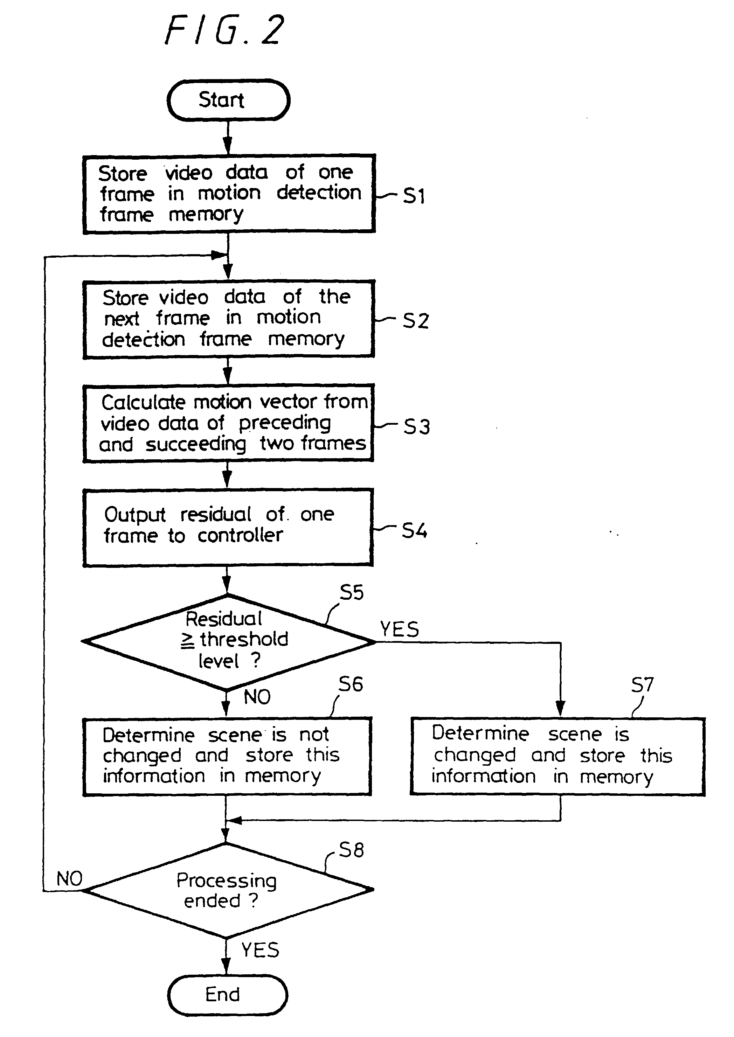

The motion detector circuit 2 detects the change of scene in accordance with a flowchart of FIG. 2, for example.

As shown in FIG. 2, following the start of operation in a step S1, the motion detector circuit 2 stores data of one frame input thereto from the digital VTR in a motion detecting frame memory housed therein in step S1. In the next step S2, image of the next frame is similarly stored in a motion detecting frame memory housed in the motion detector circuit 2. In the next step S3, a motion vector is calculated from video data of two succeeding frames. Image data is divided into blocks of a predetermined size (e.g., 8 x 8 pixels) and the motion vector is detected at every block. The motion vector thus obtained is supplied to and stored in the parameter memory 5.

The motion detector circuit 2 calculates one frame of residual information (absolute difference sum or square sum of data predicted by the resultant motion vector and present data) and outputs a calculated result to the controller 4 in step S4. In the next decision step S5, the controller 4 compares the residual information input from the motion detector circuit 2 with a predetermined threshold level that has been previously set. If the residual information is smaller than the threshold level, as represented by a NO at decision step S5, then the processing proceeds to step S6, whereat it is determined that the scene is not changed and this information is stored in a motion detection frame memory (not shown). If on the other hand the residual information is larger than the threshold level, as represented by a YES in decision step S5, then the processing proceeds to step S7, whereat it is determined that the scene is changed. The controller 4 stores the information concerning the change of scene in the memory housed therein. A similar processing is repeated until video data are found to be thoroughly processed (in decision step S8). In this way, the controller 4 judges the frame structure of the input video data and transfers and stores the frame structure thus determined in the parameter memory 5.

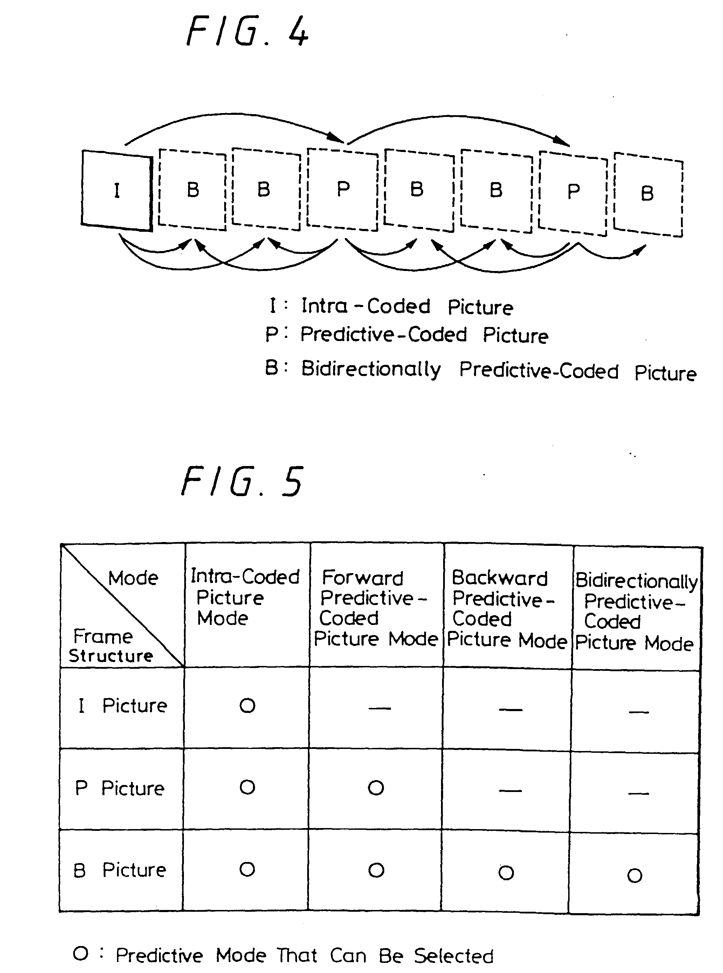

The frame structure will be described with reference to FIG. 4.

As shown in FIG. 4, it is frequently observed that video data of successive frames from a time standpoint are correlated or associated with one another. Accordingly, a difference between video data of successive frames from a time standpoint is calculated and the difference therebetween is transmitted, thereby compressing the amount of video data. Images or pictures transmitted on the basis of this principle are classified into three images, i.e., I picture (intra-coded picture), P picture (predictive-coded picture) and B picture (bidirectionally predictive-coded picture).

The I picture uses only a closed information within one picture thereof when encoded and is needed to effect random access and high speed playback. The P picture (forward predictive-coded picture) uses the preceding I picture or P picture, which is already decoded, as a reference picture to calculate a difference). In actual practice, the more efficient one of the coding process for coding a difference between a picture and a predictive picture whose motion is compensated (inter-coding process) and the coding process for coding a picture without calculating a difference (intra-coded process) is selected as the predictive mode for each macro-block (e.g., 16 x 16 pixels) as unit. The B picture uses as a predictive picture one of the preceding and already-decoded I picture or P picture, the succeeding and already-decoded I picture or P picture or the interpolated picture formed by the former two kinds of pictures. Thus, an amount of data concerning an afterimage of a moving object, for example, can be compressed. In practice, the most efficient one of the inter-coded and intra-coded processes is selected as the mode for each macro-block.

FIG. 5 of the accompanying drawings shows a table of predictive modes that can be selected for each macro-block in dependence on the respective frame structures.

The frame structure indicates the kinds of frames composed of the I picture, P picture and B picture. The sequential order of the frame structures is generally determined in such a pre-determined sequence as to dispose, for example, one P picture between two I pictures and to dispose two B pictures between two I pictures and P pictures or the like. When the change of scene occurs, the above-mentioned sequence is not always kept and suitable processing such as to select the frame structures of, for example, the I picture is necessary.

This selected frame structure is read out from the parameter memory 5 and supplied to the motion detector circuit 2 and is thereby used to calculate a motion vector. Further, this selected frame structure is also supplied to the motion compensator circuit 12 in the encoder 3 and used to calculate a motion compensation amount, as will be described later.

Furthermore, this selected frame structure is also supplied to the controller 4. The controller 4 determines a filter that is applied to each frame in the filter circuit 18 on the basis of data, such as information input by the user in a manual fashion, a frame structure from the parameter memory 5, residual information from the motion detector circuit 2 or the like. The filter information determined by the controller 4 is supplied to and stored in the parameter memory 5. The parameter memory 5 outputs the filter selection signal to the filter circuit 18. In this case, the filter selection signal is output such that a loose filter (having a wide band) is selected for the I picture, for example, and that a sharp filter (having a narrow band) is selected for the P picture and B picture. If residual information is large, then the filter selection signal is output in such a manner as to select the above-mentioned sharp filter. Then, the filter circuit 18 selects a filter on the basis of the filter selection signal.

The motion detector circuit 2 calculates a mean value of pixels and an absolute residual (absolute value difference or square sum) of respective pixels in respective macro-blocks and outputs the same to the controller 4 as an intra-coded picture residual. The controller 4 operates to determine the predictive mode of each macro-block on the basis of the already-determined frame structure, the residual and the intra-coded picture residual calculated by the motion detector circuit 2 when the change of scene is detected. The predictive mode is used to set a reference picture that is used by the motion compensator circuit 12 in the encoder 3 to calculate the difference. One of four modes, i.e., the intra-coded picture mode, forward predictive-coded picture mode, backward predictive-coded picture mode and bidirectionally predictive-coded picture mode, is selected as the predictive mode.

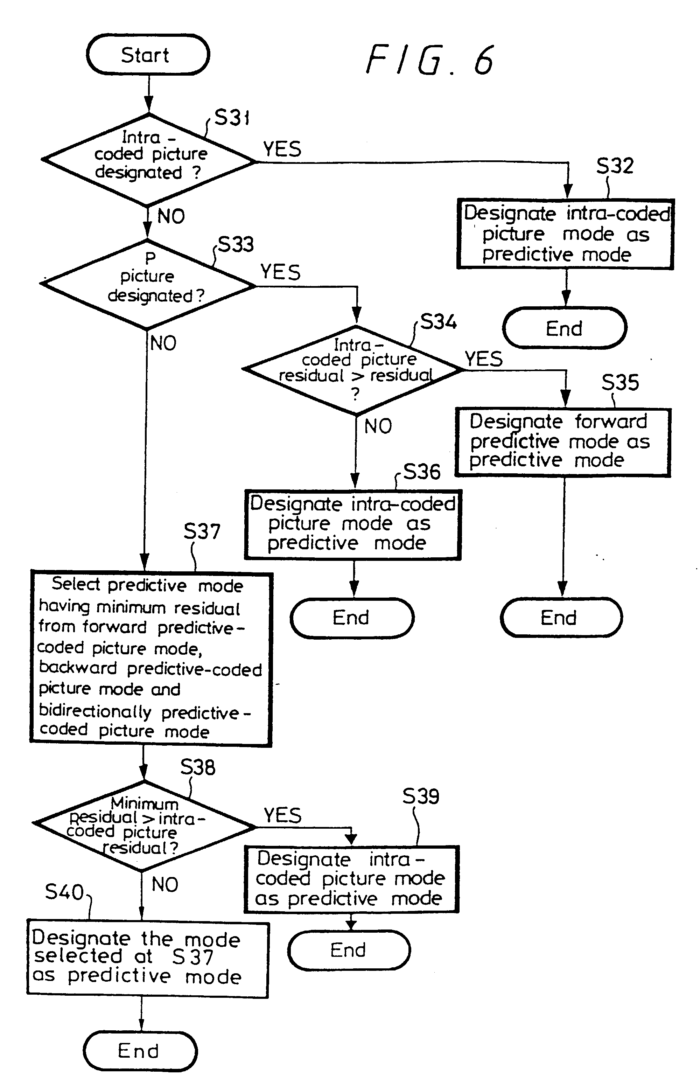

The predictive mode is determined in accordance with the flowchart of FIG. 6, in which, following the Start of operation, it is determined in decision step S31 by the controller 4 whether or not the frame structure is designated as the I picture. If the frame structure is designated as an I picture, as represented by a YES at decision step S31, then the processing proceeds to step S32, whereat the intra-coded picture mode is designated as the predictive mode. If the frame structure is not designated as an I picture, as represented by a NO at decision step S31, then the processing proceeds to the next decision step S33. In decision step S33, it is determined whether or not a P picture is designated as the frame structure. If the P picture is designated as the frame structure, as represented by a YES at decision step S33, then the processing proceeds to the next decision step S34, whereat the residual calculated by the motion detector circuit 2 and the intra-coded picture residual are compared with each other. If the intra-coded picture residual is larger than the residual, as represented by a YES at decision step S34, then the processing proceeds to step S35. In step S35, the forward predictive mode is designated as the predictive mode because it is considered that the encoding efficiency can be improved more if the difference is coded by using the predictive mode. If the intra-coded picture residual is smaller than the residual, as represented by a NO at decision step S34, then the processing proceeds to step S36, whereat the intra-coded picture mode is designated as the predictive mode because it is considered that the encoding efficiency can be improved by using the intra-frame coding. Further, if the frame structure is not a P picture as represented by a NO at decision step S33, then it is considered that a B picture is designated as the frame structure and thus the processing proceeds to step S37. In step S37, the one of the three modes of forward predictive-coded picture mode, backward predictive-coded picture mode and bidirectionally predictive-coded picture mode and whose residual becomes minimum is assumed to be a predictive mode. In the next decision step S38, it is determined whether or not the minimum residual is larger than the intra-coded picture residual. If the minimum residual is larger than the intra-coded picture residual, as represented by a YES at decision step S38, then the processing proceeds to step S39, whereat the predictive mode is designated as the intra-coded picture mode because intra-frame coding can optimize the coding efficiency. If the minimum residual is smaller than the residual within the picture, as represented by a NO at decision step S38, then the processing proceeds to step S40, whereat the mode selected at step S37 is designated as a predictive mode.

Having determined the predictive mode, the controller 4 supplies the predictive mode parameter thus determined to the parameter memory 5, in which it is stored. This predictive mode parameter is supplied to the motion compensator circuit 12 to be used by the latter.

When the intra-coded picture mode is designated as the frame structure, the motion compensator circuit 12 outputs the input image data as it is. At that time, the motion vector is not supplied to the motion compensator circuit 12 or it can be neglected.

When the forward predictive-coded picture mode is designated as the predictive mode, the motion compensator circuit 12 extracts a predictive picture from the forward predictive frame stored in the frame memory 11 by utilizing the motion vector supplied to circuit 12 and calculates and outputs a difference between the predictive picture and an input picture data.

When the backward predictive mode is designated, then the motion compensator circuit 12 extracts a predictive image from the backward predictive frame stored in the frame memory 11 by utilizing the motion vector supplied to the circuit 12.

When the bidirectionally predictive-coded picture mode is designated as the predictive mode, the motion compensator circuit 12 extracts the forward predictive picture from the forward predictive frame stored in the frame memory 11 by utilizing two motion vectors of the forward and rearward predictive pictures. Further, the motion compensator circuit 12 extracts the predictive picture from the rearward predictive frame and averages the thus extracted forward and rearward predictive pictures to provide a predictive picture and calculates and outputs a difference between the predictive picture and the input picture data.

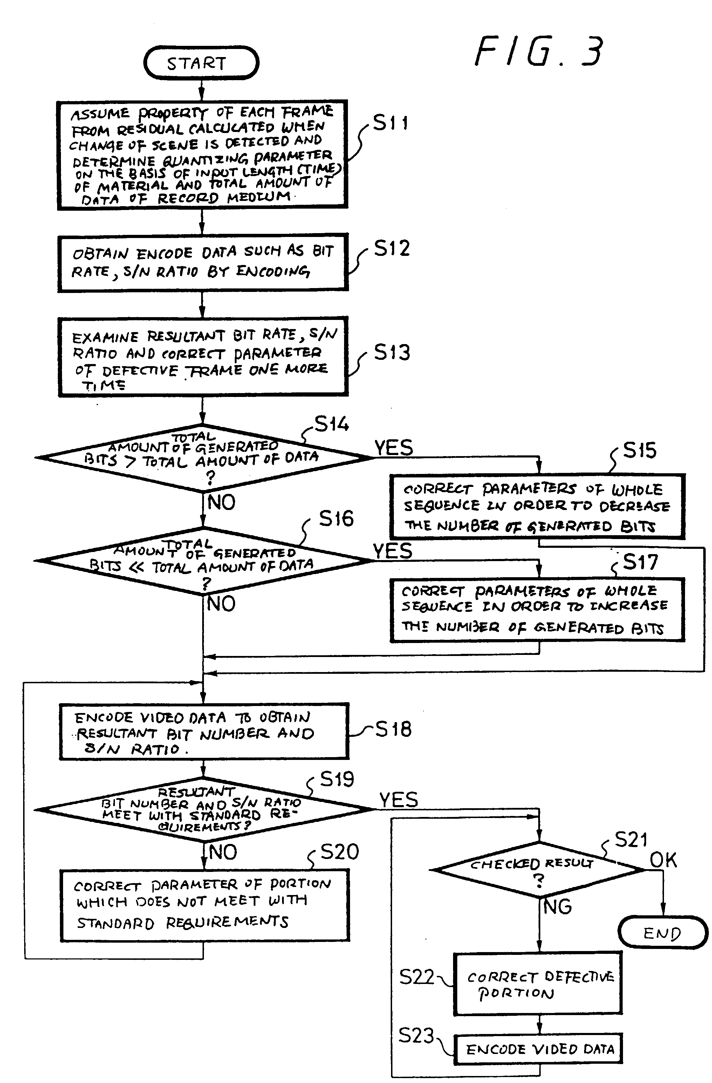

When the motion vector and the frame structure are determined as described above, the processing shown in a flowchart of FIG. 3 is executed. More specifically, in step S11, the controller 4 assumes a property of each frame from the residual calculated by the motion detector circuit 2 when the change of scene is detected, and the quantizing parameter is determined on the basis of this assumption, input length (time) of a material recorded on a video tape set on the digital VTR 1 and a total amount of data that can be recorded on the disk 20.

In other words, the quantizing parameter is determined such that the amount of resultant codes from the material recorded on the video tape set on the digital VTR 1 becomes the same (or falls within a tolerance in which they can be regarded as the same) as the total amount of data in the disk 20.

That is, if the length of the material, for example, is long, then the quantizing parameter is made large in order to suppress the amount of the resultant codes. If the total amount of data in the disk 20 is large, then the quantizing parameter is made small in order to effectively utilize the recording area.

Alternatively, the quantizing parameter may be determined by setting the target value of the amount of the resultant codes from the material to be a little smaller than the total amount of data.

The quantizing parameter is used to set a quantization step size of the quantizer circuit 14 in the encoder 3. To be more concrete, this quantizing parameter is used as a divisor when data output from the DCT circuit 13, for example, is divided by a predetermined value.

Having determined the quantizing parameter, the controller 4 supplies the quantizing parameter thus determined to the parameter memory 5, in which it is stored . This quantizing parameter is supplied from the parameter memory 5 to the quantizer circuit 14 and determines the quantization step size of the quantizer circuit 14.

The encoder 3 operates to encode the video data supplied thereto from the digital VTR 1 in response to the motion vector, the frame structure, the predictive mode and the quantizing parameter supplied thereto from the parameter memory 5. Then, the encoder 3 outputs resultant encode data (bit rate and S/N ratio) to the controller 4 in step S12. The controller 4 examines the resultant bit rate, the S/N ratio or the like supplied thereto from the encoder 3 and sets or corrects a parameter of a defective frame one more time in step S13. That is, if the resultant bit number cannot be reduced sufficiently (i.e., amount of data cannot be compressed sufficiently) or satisfactory S/N ratio cannot be obtained, then the parameter thus set is regarded as an improper one and a parameter is set one more time.

Further, the total amount of resultant codes and the total amount of data in the disk 20 are compared with each other in steps S14, S16. If the total amount of resultant codes is larger than the total amount of data in the disk 20, as represented by a YES at decision step S14, then the processing proceeds to step S15, whereat the following operations of parameters are carried out to thereby suppress the amount of resultant codes.

More specifically, quantizing parameters of a whole of or a part of the sequence (compression coding processing) are set to be larger one more time. A frame structure will be corrected and a frequency of B picture will be increased, if necessary. Further, the predictive mode is corrected and a frequency of intra-macro block is decreased or a frequency of a bidirectional predictive macro block is increased. Furthermore, the filter that had been served as the pre-filter of the filter circuit 18 is changed to a filter having a characteristic to suppress more effectively a high band component of input video data.

If on the other hand the total amount of resultant codes is much less than the total amount of data in the disk 20, as represented by a YES at decision step S16, then the processing proceeds to step S17, whereat the following operations are carried out to thereby increase the amount of resultant codes.

More specifically, quantizing parameters of a whole of or a part of the sequence are set to be smaller one more time. A frame structure will be corrected and a frequency of B picture will be decreased, if necessary. Further, the predictive mode is corrected and a frequency of intra-macro block is increased or a frequency of a bidirectional predictive macro block is decreased. Furthermore, the filter that had been served as the pre-filter of the filter circuit 18 is changed to a filter having a characteristic that cannot suppress a high band component of input video data. Alternatively, under the following control operation, the switch circuit 19 is operated such that the filter circuit 18 is by-passed so as to allow video data from the digital VTR 1 to be directly input to the encoder 3.

The controller 4 determines on the basis of the coded parameter stored in the parameter memory 5 whether or not a trouble occurs when video data whose frequency band is not suppressed by the filter circuit 18 is directly input to the encoder 3 from the digital VTR 1. In other words, the controller 4 determines whether or not the amount of resultant codes from the video data is vehemently increased. If the controller 4 determines that no trouble occurs, then the controller 4 supplies and stores switching information in the parameter memory 5. This switching information is supplied from the parameter memory 5 to the switch circuit 19 as a switching signal. Then, on the basis of this switching signal, the switch circuit 19 selects video data from the digital VTR 1 instead of the video data from the filter circuit 18, whereby video data whose frequency band is not limited is input to the encoder 3.

In the next step S18, the encoder 3 encodes again the video data in accordance with the parameter thus set again. The resultant bit number and S/N ratio from the encoder 3 are supplied to the controller 4 similarly as described above. In the next decision step S19, it is determined by the controller 4 whether or not the resultant bit number and S/N ratio meet with standard requirements. If they do not meet with standard requirement, as represented by a NO at decision step S19, then the processing proceeds to the next step S20, whereat the parameter of the portion which does not meet with the standard requirements is corrected. Then, the processing returns to step S18, wherein the encoder 3 encodes the video data one more time.

If the resultant bit number and S/N ratio, which meet with standard requirements, are obtained, as represented by a YES at decision step S19, then the processing proceeds to the next decision step S21, whereat the checking by the user is carried out. That is, the picture processed by the encoder 3 is output and displayed on the video monitor 6. In the next step S22, the user corrects a defective portion, if any, while watching the picture displayed on the video monitor 6. In other words, the predictive mode and the quantizing parameter are set one more time via the controller 4 in a manual fashion, and the encoder 3 encodes again the video data in accordance with the corrected parameter in step S23. This processing from steps S21 to S23 is repeated until it is determined visually that the picture has no problem.

If a satisfactory picture is thus obtained, then the bit stream output from the encoder 3 is supplied to a recording apparatus, for being recorded thereby, for example, on a record medium such as a disk or the like. The parameter memory 5 stores all parameters that are adjusted and set as described above. If the parameter is set as described above, then the video data output from the digital VTR 1 can be correctly compressed in data amount into image data set and adjusted as described above and then output.

Processing operations of the encoder 3 will be described next.

Referring back to FIG. 1, the video data input to the encoder 3 from the digital VTR 1 is stored in the frame memory 11 thereof. The motion compensator circuit 12 compensates for the video data stored in the frame memory 11 by using the predictive mode and the motion vector input thereto from the parameter memory 5 to thereby generate a predictive picture. Data of the predictive picture whose motion is compensated for is supplied to the DCT circuit 13, in which it is processed in a DCT fashion. The DCT processing expresses a picture not by the pixel level but by the amount of frequency component of cosine function contained therein. For example, a two-dimensional DCT converts a pixel block of 8 x 8 pixels into a coefficient block of 8 x 8 cosine function components. Accordingly, in a natural picture picked up by a television camera, for example, it is frequently observed that the above coefficient block is presented as a smooth signal. In this case, if the video data is processed in a DCT fashion, the amount of data can be reduced efficiently.

When the quantizer circuit 14 quantizes the output of the DCT circuit 13 by a predetermined step size in response to the quantizing parameter supplied thereto from the parameter memory 5, then most of the data thus processed in a DCT fashion become zero and a small amount of large coefficient remains. Then, the output of the quantizer circuit 14 is supplied to the variable length coder circuit 15, in which it is scanned in a zigzag fashion to provide a Huffman code (variable length code) having a set of non-zero coefficient and zero-run indicating the number of zeroes continuously provided in front of the non-zero coefficient. The amount of data in the Huffman code is considerably compressed as compared with the original video data output from the digital VTR 1.

When the P picture or B picture is processed as set forth above, data of a preceding frame is needed from a time standpoint. To prepare such data, the output of the quantizer circuit 14 is inverse-quantized by the inverse-quantizer 16. Then, the inverse-quantized data is processed by the inverse DCT circuit 17 in an inverse-DCT fashion and then stored in the frame memory 11. That is, the same data as that quantized by the quantizer circuit 14 and which is output from the variable length coder circuit 15 is stored in the frame memory 11. When necessary, the motion compensator circuit 12 processes the data in a predetermined manner with reference to the data of the preceding frame stored in the frame memory 11.

The data thus encoded is read out from the frame memory 11 and supplied to the video monitor 6, thereby making it possible to visually confirm the resultant picture thus processed.

In the video coder embodying the present invention, since the parameters necessary for the encoding processing are stored, the data are coded via multiple paths, which can reduce restrictions from the standpoint of time and also reduce the scale of a hardware needed for encoding.

As described above, the encoded parameters are varied on the basis of the S/N ratio of the coded data of the video data. Also, the coding parameters are varied such that the amount of data that can be recorded on the disk 20 and the amount of resultant codes of the video data become the same (or they fall in a tolerance so that they can be regarded as the same). Therefore, even when data that can be recorded on the disk 20 whose amount of data to be recorded thereon is fixed is data with a variable rate, such data can be fully recorded on the disk 20 and the recording area of the disk 20 can be prevented from being left uselessly. Also, the picture quality can be prevented from being deteriorated.

Further, since the video coder embodying the present invention has encoded parameters prepared therein, only necessary portions can be repeatedly modified, thereby making it possible to effect the finer control operation,

While the disk 20 is used as a recording medium in which coded data is recorded as described above, the present invention is not limited thereto.

Further, while the S/N ratio of the coded data is used as a so-called S/N ratio of a signal, this S/N ratio may be understood as a sum of difference or average value of video data that is not yet coded and coded video data at every pixel.

Having described a preferred embodiment of the invention with reference to the accompanying drawings, it is to be understood that the invention is not limited to that precise embodiment and that various changes and modifications could be effected therein by one skilled in the art without departing from the scope of the invention as defined in the appended claims.

## Claims

1. A video coder for compressing and encoding input video data representing a sequence of video frames, for storage on a disk storage medium (20), comprising:
means for setting coding parameters including frame structure information which determines a coding system for every frame of said input video data;
first encode means (3) for coding said video data into first coded video data on the basis of said coding parameters;
memory means (5) for storing said coding parameters;
compare means (4) for comparing amount of said first coded video data with an available storage space on said disk storage medium;
control means (4) for varying said coding parameters stored in said memory means into other coding parameters on the basis of comparative result of said compare means and the S/N ratio of said first coded video data; and
second encode means (3) for coding the same video data that is coded in said first encode means into second coded video data for transmission on the basis of said other coding parameters.

2. The video coder according to claim 1, further comprising:
filter means (18) for filtering said video data, and said coding parameters include filter information for controlling a filter characteristic of said filter means.

3. The video coder according to claim 1, wherein said first encode means (3) includes quantizing means (14) for quantizing said input video data and providing corresponding quantized data; and said coding parameters include a quantizing parameter for controlling a quantizing characteristic of said quantizing means.

4. The video coder according to claim 1, wherein said coding parameters include predictive mode information which regulates a reference picture for calculating a difference of every predetermined block.

5. The video coder according to claim 3, further comprising motion detecting means (2) for detecting a motion of said input video data and providing a corresponding motion vector included in said coding parameters; and in which said first encode means include inverse quantizing means for inverse-quantizing said quantized data, and motion compensation means (12) for compensating a motion of the inverse- quantized data by using the motion vector detected by said motion detecting means.

6. The video coder according to claim 5, wherein said first encode means further include means (13) provided at a preceding stage of said quantizing means for processing said input video data in a discrete cosine transform (DCT) fashion, and means provided at a succeeding stage of inverse-quantizing means for processing said input video data in an inverse-DCT fashion.

7. A video coding method for compressing an amount of video data representing a sequence of video frames, for storage on a disk storage medium, said method comprising the steps of:
setting coding parameters including frame structure information which determines a coding system for every frame of said input video data;
storing said coding parameters in memory means;
first coding said video data into first coded video data on the basis of said coding parameters;
comparing amount of said first coded video data with an available storage space on said disk storage medium;
varying said coding parameters stored in said memory means into other coding parameters on the basis of comparative result of the step of comparing and the S/N ratio of said first coded video data; and
second coding the same video data that is coded in the step of the first coding into second coded video data for transmission on the basis of said other coding parameters.

8. The video coder according to claim 7, further comprising the step of:
filtering said video data, and said coding parameters include filter information for controlling a filter characteristic of said filter means.

9. The video coding method according to claim 7, wherein said coding parameters include a quantizing parameter which is used to control a quantizing characteristic.

10. The video coding method according to claim 7, wherein said coding parameters include predictive mode information which regulates a reference picture for calculating a difference of every predetermined block.

11. The video coding method according to claim 7, wherein said coding parameters include a motion vector; and further comprising the step of effecting motion compensation of said video data in accordance with said motion vector.

## Patentansprüche

1. Videocodierer zum Komprimieren und Codieren von Eingangsvideodaten, die eine Folge von Videovollbildern darstellen, zum Speichern auf einem Plattenspeicherträger (20), der aufweist:
eine Einrichtung zum Setzen von Codierparametern einschließlich einer Vollbildstrukturinformation, die ein Codiersystem für jedes Vollbild der Eingangsvideodaten festlegt;
eine erste Codiereinrichtung (3), um die Videodaten in erste codierte Videodaten auf der Basis der Codierparameter zu codieren;
einen Speicher (5), um die Codierparameter zu speichern;
eine Vergleichseinrichtung (4), um die Menge der ersten codierten Videodaten mit einem verfügbaren Speicherplatz auf dem Plattenspeicherträger zu vergleichen;
eine Steuerung (4), um die Codierparameter, die im Speicher gespeichert sind, in andere Codierparameter auf der Basis des Vergleichsergebnisses der Vergleichseinrichtung und des Signal-Rausch-Verhältnisses der ersten codierten Videodaten zu variieren; und
eine zweite Codiereinrichtung (3), um die gleichen Videodaten, die in der ersten Codiereinrichtung codiert wurden, in zweite codierte Videodaten zur Übertragung auf der Basis der anderen Codierparameter zu codieren.

2. Videocodierer nach Anspruch 1, der außerdem aufweist:
ein Filter (18), um die Videodaten zu filtern, wobei die Codierparameter eine Filterinformation umfassen, um eine Filterkennlinie des Filters zu steuern.

3. Videocodierer nach Anspruch 1, wobei die erste Codiereinrichtung (3) eine Quantisiereinrichtung (14) umfaßt, um die Eingangsvideodaten zu quantisieren und entsprechende Quantisierungsdaten bereitzustellen; und die codierten Parameter einen Quantisierparameter umfassen, um eine Quantisierungskennlinie der Quantisierungseinrichtung zu steuern.

4. Videocodierer nach Anspruch 1, wobei die Codierparameter eine Vorhersagemodusinformation umfassen, die ein Referenzbild einstellt, um eine Differenz von jedem vorgegebenen Block zu berechnen.

5. Videocodierer nach Anspruch 3, der außerdem eine Bewegungsermittlungseinrichtung (2) umfaßt, um eine Bewegung der Eingangsvideodaten zu ermitteln und um einen entsprechenden Bewegungsvektor bereitzustellen, der in den Codierparametern enthalten ist; und bei dem die erste Codiereinrichtung eine Invers-Quantisierungseinrichtung umfaßt, um die quantisierten Daten invers-zu-quantisieren, und eine Bewegungskompensationseinrichtung (12), um eine Bewegung der invers-quantisierten Daten durch Verwendung des Bewegungsvektors zu kompensieren, der durch die Bewegungsermittlungseinrichtung ermittelt wurde.

6. Videocodierer nach Anspruch 5, wobei die erste Codierungseinrichtung außerdem eine Einrichtung (13) umfaßt, die in einer vorhergehenden Stufe der Quantisierungseinrichtung vorgesehen ist, um die Eingangsvideodaten in Art einer diskreten Kosinustransformation (DCT) zu verarbeiten, und eine Einrichtung, die in einer vorhergehenden Stufe der InversQuantisierungs-Einrichtung vorgesehen ist, um die Eingangsvideodaten in Art einer InversDCT zu verarbeiten.

7. Videocodierverfahren zum Komprimieren einer Videodatenmenge, die eine Folge von Videovollbildern darstellt, zum Speichern auf einem Plattenspeicherträger, wobei das Verfahren folgende Schritte aufweist:
Setzen von Codierparametern einschließlich einer Vollbildstrukturinformation, welche ein Codiersystem für jedes Vollbild der Eingangsvideodaten festlegt;
Speichern der Codierparameter im Speicher;
erstes Codieren der Videodaten in erste codierte Videodaten auf der Basis der Codierparameter;
Vergleichen der Menge der ersten codierten Videodaten mit einem verfügbaren Speicherplatz auf dem Plattenspeicherträger;
Variieren der Codierparameter, die im Speicher gespeichert sind, in andere Codierparameter auf der Basis des Vergleichsergebnisses des Vergleichsschritts und des Signal-Rausch-Verhältnisses der ersten codierten Videodaten; und
zweites Codieren der gleichen Videodaten, die im Schritt der ersten Codierung codiert wurden, in zweite codierte Videodaten zur Übertragung auf der Basis der anderen Codierparameter

8. Videocodierer nach Anspruch 7, der außerdem folgenden Schritt umfaßt:
Filtern der Videodaten, und wobei die Codierparameter eine Filterinformation umfassen, um eine Filterkennlinie des Filters zu steuern.

9. Videocodierverfahren nach Anspruch 7, wobei die Codierparameter einen
Quantisierungsparameter umfassen, der dazu verwendet wird, eine Quantisierungskennlinie zu steuern.

10. Videocodierverfahren nach Anspruch 7, wobei die Codierparameter eine Vorhersagemodusinformation umfassen, die ein Referenzbild einstellt, um eine Differenz von jedem vorgegebenen Block zu berechnen.

11. Videocodierverfahren nach Anspruch 7, wobei die Codierparameter einen Bewegungsvektor umfassen; und außerdem den Schritt umfaßt, eine Bewegungskompensation der Videodaten gemäß dem Bewegungsvektor auszuführen.

## Revendications

1. Codeur vidéo destiné à compresser et à coder des données vidéo d'entrée représentant une séquence de trames vidéo, en vue d'une mémorisation sur un support de stockage sur disque (20), comprenant :
un moyen destiné à établir des paramètres de codage comprenant des informations de structure de trame qui déterminent un système de codage pour chaque trame desdites données vidéo d'entrée,
un premier moyen de codage (3) destiné à coder lesdites données vidéo en des premières données vidéo codées sur la base desdits paramètres de codage,
un moyen de mémoire (5) destiné à mémoriser lesdits paramètres de codage,
un moyen de comparaison (4) destiné à comparer la quantité desdites premières données vidéo codées à un espace de stockage disponible sur ledit support de stockage sur disque,
un moyen de commande (4) destiné à faire varier lesdits paramètres de codage mémorisés dans lesdits moyens de mémoire en d'autres paramètres de codage sur la base du résultat comparatif dudit moyen de comparaison et du rapport signal/bruit desdites premières données vidéo codées, et
un second moyen de codage (3) destiné à coder les mêmes données vidéo que celles qui sont codées dans ledit premier moyen de codage en des secondes données vidéo codées en vue d'une transmission sur la base desdits autres paramètres de codage.

2. Codeur vidéo selon la revendication 1, comprenant en outre :
un moyen de filtre (18) destiné à filtrer lesdites données vidéo, et lesdits paramètres de codage comprennent des informations de filtre destinées à commander une caractéristique de filtre dudit moyen de filtre.

3. Codeur vidéo selon la revendication 1, dans lequel ledit premier moyen de codage (3) comprend un moyen de quantification (14) destiné à quantifier lesdites données vidéo d'entrée et à fournir des données quantifiées correspondantes, et lesdits paramètres de codage comprennent un paramètre de quantification destiné à commander une caractéristique de quantification dudit moyen de quantification.

4. Codeur vidéo selon la revendication 1, dans lequel lesdits paramètres de codage comprennent des informations de mode prédictif qui régulent une image de référence en vue de calculer une différence pour chaque bloc prédéterminé.

5. Codeur vidéo selon la revendication 3, comprenant en outre un moyen de détection de mouvement (2) destiné à détecter un mouvement desdites données vidéo d'entrée et à fournir un vecteur de mouvement correspondant inclus dans lesdits paramètres de codage, et dans lequel ledit premier moyen de codage comprend un moyen de quantification inverse destiné à quantifier de façon inverse lesdites données quantifiées, et un moyen de compensation de mouvement (12) destiné à compenser un mouvement des données quantifiées de façon inverse en utilisant le vecteur de mouvement détecté par ledit moyen de détection de mouvement.

6. Codeur vidéo selon la revendication 5, dans lequel ledit premier moyen de codage comprend en outre un moyen (13) disposé au niveau d'un étage précédent dudit moyen de quantification en vue de traiter lesdites données vidéo d'entrée dans une transformation en cosinus discrète (DCT), et un moyen prévu au niveau d'un étage suivant d'un moyen de quantification inverse afin de traiter lesdites données vidéo d'entrée par une transformation DCT inverse.

7. Procédé de codage vidéo destiné à compresser une certaine quantité de données vidéo représentant une séquence de trames vidéo, en vue d'un stockage sur un support de stockage sur disque, ledit procédé comprenant les étapes consistant à :
établir des paramètres de codage comprenant des informations de structure de trame qui déterminent un système de codage pour chaque trame desdites données vidéo d'entrée,
mémoriser lesdits paramètres de codage dans un moyen de mémoire,
coder tout d'abord lesdites données vidéo en des premières données vidéo codées sur la base desdits paramètres de codage,
comparer une quantité desdites premières données vidéo codées à un espace de stockage disponible sur ledit support de stockage sur disque,
faire varier lesdits paramètres de codage mémorisés dans ledit moyen de mémoire en d'autres paramètres de codage sur la base du résultat comparatif de l'étape de comparaison et du rapport signal/bruit desdites premières données vidéo codées, et
coder en second les mêmes données vidéo que celles qui sont codées à l'étape du premier codage en des secondes données vidéo codées en vue d'une transmission sur la base desdits autres paramètres de codage.

8. Codeur vidéo selon la revendication 7, comprenant en outre les étapes consistant à :
filtrer lesdites données vidéo, et dans lequel lesdits paramètres de codage comprennent des informations de filtre afin de commander une caractéristique de filtre dudit moyen de filtre.

9. Procédé de codage vidéo selon la revendication 7, dans lequel lesdits paramètres de codage comprennent un paramètre de quantification qui est utilisé pour commander une caractéristique de quantification.

10. Procédé de codage vidéo selon la revendication 7, dans lequel lesdits paramètres de codage comprennent des informations de mode prédictif qui régulent une image de référence en vue de calculer une différence de chaque bloc prédéterminé.

11. Procédé de codage vidéo selon la revendication 7, dans lequel lesdits paramètres de codage comprennent un vecteur de mouvement, et comprennent en outre l'étape consistant à réaliser la compensation du mouvement desdites données vidéo conformément audit vecteur de mouvement.
